# EUROPEAN PATENT APPLICATION

(11) **EP 4 442 493 A1**
(43) Date of publication of application: **09.10.2024**
(21) Application number: 22901670.4
(22) Date of filing: 24.11.2022
(51) Int. Cl.: B60L 53/35, B60L 53/67, B60L 58/12, B60L 53/37, B60L 53/16, B60L 53/10

(54) **ELECTRIC VEHICLE CHARGING SYSTEM AND METHOD USING CHARGING MODULE**

(30) Priority: 03.12.2021 KR 20210171982; 19.01.2022 KR 20220007702
(71) Applicant: Evar Inc., Gyeonggi-do 13449 (KR)
(72) Inventor: LEE, Hun, Suwon-si Gyeonggi-do 16509 (KR); SHIN, Dong Hyuk, Seongnam-si Gyeonggi-do 13599 (KR); KIM, Ki Jae, Seoul 05809 (KR)
(74) Representative: Frenkel, Matthias Alexander
(86) International application number: PCT/KR2022/018673
(87) International publication number: WO 2023/101312

(57) **Abstract**

Provided are an electric vehicle charging system and method using a charging module. An electric vehicle charging system using a charging module according to various embodiments of the present invention comprises: a first charging module group including a plurality of first charging modules fixedly disposed on the same line in a first direction within a predetermined area; and a second charging module disposed within the predetermined area and moving according to a control command, wherein the first charging module group calls the second charging module as an electric vehicle is electrically connected to at least one first charging module among the plurality of first charging modules, and the second charging module moves along a set line in a second direction and is electrically connected to the at least one first charging module, such that a battery of the electric vehicle is charged by using the power of the second charging module.

## Description

### [Technical Field]

Various embodiments of the present invention relate to an electric vehicle charging system and method using a charging module.

### [Background Art]

Electric vehicles (EVs) are a future convergence technology receiving interest and investment from governments and companies around the world in line with the global green growth policy trend. Accordingly, the automobile industry is rapidly changing the focus of market demand from conventional oil-based vehicles to electric vehicles.

With the increase in demand for electric vehicles, in addition to technology not only for electric vehicles but also for infrastructure construction (charging devices, power supply grids, and the like) for smooth use of electric vehicles, many methods and technologies capable of charging a plurality of electric vehicles have been developed recently.

In general, an electric vehicle charging system in the related art is operated in a way that an electric vehicle charger is provided in a part of a space where vehicles are allowed to park, such as an underground parking lot, and a person who wants to charge an electric vehicle parks the electric vehicle in a place where the electric vehicle charger is provided and charges the electric vehicle.

However, it is difficult to find a location of an electric vehicle charger in a complex parking lot, and even when knowing the location, it is common to wander around the parking lot to look for an available charger.

In addition, since there are many cases in which the electric vehicle continues to be parked in an electric vehicle charging space provided in a parking lot even after electric vehicle charging is finished, when an available charging space is informed through whether or not the electric vehicle charging device is operating, a problem of having to find a charging space again may occur because someone else's electric vehicle is parked.

### [Disclosure]

### [Technical Problem]

The present invention has been made in order to solve the aforementioned problem with the electric vehicle charging system in the related art, and is directed to providing an electric vehicle charging system using a charging module capable of more easily charging an electric vehicle without restrictions on parked locations by supplying electric power to charging modules fixedly disposed at a plurality of points using a movable charging module.

Problems to be solved by the present invention are not limited to those mentioned above, and other problems not mentioned will be clearly understood by those of ordinary skill in the art from the following description.

### [Technical Solution]

In order to solve the aforementioned problems, an electric vehicle charging system using a charging module according to one embodiment of the present invention includes a first charging module group including a plurality of first charging modules fixedly disposed on the same line within a predetermined area and a second charging module disposed within the predetermined area and configured to perform a movement operation according to a control command, and the first charging module group calls the second charging module as one or more of the plurality of first charging modules and an electric vehicle are electrically connected, and charges a battery of the electric vehicle using electric power of the second charging module as the second charging module moves and is electrically connected to the one or more first charging modules.

In various embodiments, in the first charging module group, the plurality of first charging modules may be connected to one power line in a first direction, wherein each of the plurality of first charging modules may be electrically disconnectable from the others according to the method of charging an electric vehicle, and electric power of the second charging module may be supplied to the one or more first charging modules through a power line connecting a representative first charging module of the first charging module group and the one or more first charging modules when the second charging module moves along a preset line in a second direction and is connected to the representative first charging module.

In various embodiments, the representative first charging module may be a first charging module fixedly disposed at a location closest to the preset line among the plurality of first charging modules.

In various embodiments, the representative first charging module may include a connector connected to the second charging module, and the second charging module may include a camera sensor and may be connected to the connector by analyzing image data generated by photographing the connector through the camera sensor when a first marker attached to a location adjacent to the connector is identified using the camera sensor.

In various embodiments, the electric vehicle charging system may include a plurality of first charging module groups, and the second charging module may include a camera sensor, and when a call is received from any one of the plurality of first charging module groups, determine a current location of the second charging module using the camera sensor to identify a second marker attached to a location adjacent to a representative first charging module of each of the plurality of first charging module groups and generate a movement path of the second charging module based on the determined current location of the second charging module.

In various embodiments, the electric vehicle charging system may include a plurality of first charging module groups, a laser line in the second direction may be generated as the preset line by emitting a laser into a predetermined area through a laser output module provided in a representative first charging module of each of the plurality of first charging module groups, and the second charging module may move along the generated laser line according to a control command.

In various embodiments, the electric vehicle charging system may include a plurality of second charging modules, and the first charging module group may call the second charging modules as the plurality of first charging modules and the electric vehicle are connected, wherein the number of the second charging modules to be called may be determined based on the number of the first charging modules connected to the electric vehicle among the plurality of first charging modules.

In various embodiments, the first charging module group may charge the battery of the electric vehicle at low speed using electric power supplied from an external power source when the first charging module group is connected to the external power source and any one of the plurality of first charging modules is connected to the electric vehicle, and the first charging module group may call the second charging module when a high-speed charging request is received from a user and charge the battery of the electric vehicle at high speed using the electric power of the second charging module and the electric power of the external power source as the second charging module and the any one first charging module are electrically connected.

In various embodiments, the electric vehicle charging system may include a plurality of second charging modules, and the second charging modules may be called when the high-speed charging request is received from the user, wherein the number of the second charging modules to be called may be determined based on the number of electric vehicles to be charged at high speed within one first charging module group.

In various embodiments, the electric vehicle charging system may include a plurality of first charging module groups, and the second charging module may include a battery, select any one of the plurality of first charging module groups when a charge amount of the battery is less than a reference value, and charge the battery by being connected to a representative first charging module of the selected any one first charging module group to receive electric power supplied from an external power source connected to the any one first charging module group through the representative first charging module of the selected any one first charging module group.

In order to solve the aforementioned problems, a method of charging an electric vehicle using a charging module according to another embodiment of the present invention is a method of charging an electric vehicle using a charging module that is performed using an electric vehicle charging system using a charging module including a first charging module group including a plurality of first charging modules fixedly disposed on the same line within a predetermined area and a second charging module disposed within the predetermined area and configured to perform a movement operation according to a control command, including electrically connecting one or more of the plurality of first charging modules and the electric vehicle, calling the second charging module, and charging a battery of the electric vehicle using electric power of the second charging module as the second charging module moves and is electrically connected to the one or more first charging modules.

Other details of the present invention are included in the detailed description and drawings.

### [Advantageous Effects]

According to various embodiments of the present invention, by supplying electric power to charging modules fixedly disposed at a plurality of points using a movable charging module, there is an advantage that an electric vehicle can be more easily charged without restrictions on parked locations.

In addition, there is an advantage that electric power supply can be performed more quickly and efficiently by supplying electric power to charging modules fixedly disposed at a plurality of points using a movable charging module and guiding a movement operation of the movable charging module along a preset line such as a line laser or the like.

Effects of the present invention are not limited to those mentioned above, and other effects not mentioned will be clearly understood by those of ordinary skill in the art from the description below.

### [Description of Drawings]

FIG. 1 is a view illustrating an electric vehicle charging system using a charging module according to one embodiment of the present invention.
FIGS. 2A and 2B are views illustrating a first charging module group applicable to various embodiments.
FIGS. 3A and 3B are views illustrating a second charging module applicable to various embodiments.
FIG. 4 is a diagram illustrating a first charging module in the form of an energy storage system (ESS), in various embodiments.
FIG. 5 is a diagram illustrating a first charging module in a dummy form in various embodiments.
FIG. 6 is a diagram illustrating a first charging module in the form capable of autonomously performing a low-speed charging operation in various embodiments.
FIG. 7 is a flowchart of a method of charging an electric vehicle using a charging module according to another embodiment of the present invention.
FIG. 8 is a diagram illustrating a process of charging an electric vehicle using a charging module in various embodiments.
FIG. 9 is a flowchart of a method of charging an electric vehicle at low and high speeds using a charging module according to still another embodiment of the present invention.
FIG. 10 is a diagram illustrating a process of charging an electric vehicle at low and high speeds using a charging module in various embodiments.
FIG. 11 is a hardware configuration diagram of a server that performs a method of charging an electric vehicle using a charging module according to yet another embodiment of the present invention.

### [Modes of the Invention]

Advantages and features of the present invention, and methods for achieving the advantages and features will be clarified with reference to embodiments described below in detail together with the accompanying drawings. However, the present invention is not limited to the embodiments disclosed below, and may be implemented in a variety of different forms. The present embodiments are only provided to allow disclosure of the present invention to be complete, and to completely inform those of ordinary skill in the art to which the present invention belongs of the scope of the present invention, and the present invention is merely defined by scope of the claims.

The terms used in the present specification are for the purpose of describing the embodiments only and are not intended to limit the present invention. In the present specification, the singular forms are intended to include the plural forms as well, unless the context clearly indicates otherwise. It will be further understood that the terms "comprises" and/or "comprising", when used in this specification, do not preclude the presence or addition of one or more other elements in addition to the mentioned element. Like reference numerals refer to like elements throughout the specification, and "and/or" includes each of the referenced elements and all combinations of one or more of the referenced elements. Although "first", "second", etc. are used to describe various components, the components are of course not limited by the terms. The terms are merely used to distinguish one component from another. Therefore, it goes without saying that a first component mentioned below may also be a second component within the technical spirit of the present invention.

Unless otherwise defined, all terms (including technical and scientific terms) used herein have the same meanings as commonly understood by those of ordinary skill in the art to which the present invention pertains. In addition, it will be further understood that terms, such as those defined in commonly used dictionaries, will not be interpreted in an idealized or overly formal sense unless expressly so defined herein.

The term "unit" or "module" used in the specification refers to a hardware component such as software, FPGA, or ASIC, and the "unit" or "module" performs certain roles. However, "unit" or "module" may not be limited to software or hardware components. "Unit" or "module" may be configured to be in an addressable storage medium, or may be configured to reproduce one or more processors. Therefore, for example, "unit" or "module" includes components such as software components, object-oriented software components, class components, and task components, and includes processes, functions, attributes, procedures, sub-routines, segments of program code, drivers, firmware, micro codes, circuits, data, a database, data structures, tables, arrays, and variables. Functions provided in the components and the "unit" or "module" may be coupled with lesser numbers of components and "units" or "modules," or may be further divided into additional components and "units" or "modules."

Spatially relative terms such as "below," "beneath," "lower," "above," "upper," etc. may be used to easily describe the correlation between one component and other components as shown in the drawings. Spatially relative terms should be understood as terms that include different directions of components during use or operation in addition to directions shown in the drawings. For example, when a component shown in a drawing is turned over, a component described as "below" or "beneath" another component may be placed "above" the other component. Accordingly, the illustrative term "below" may include both downward and upward directions. A component may also be oriented in other directions, and thus spatially relative terms may be interpreted according to orientation.

In the present specification, a computer refers to all types of hardware devices including at least one processor, and may be understood as encompassing software configurations that operate on a hardware device depending on the embodiment. For example, a computer may be understood to include a smartphone, a tablet PC, a desktop, a laptop, and a user client and application running on each device, but is not limited thereto.

Hereinafter, embodiments of the present invention will be described in detail with reference to the accompanying drawings.

Each step described in this specification is described as being performed by a computer, but the subject of each step is not limited thereto, and at least part of each step may be performed in a different device depending on the embodiment.

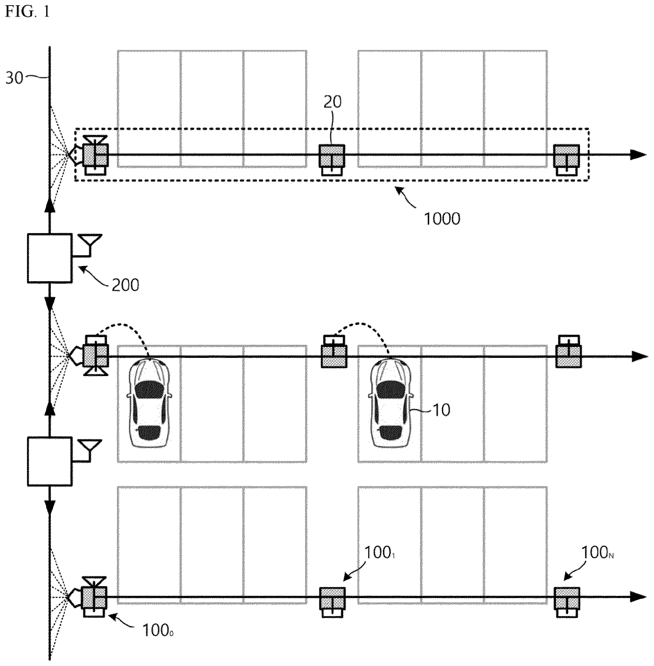

FIG. 1 is a view illustrating an electric vehicle charging system using a charging module according to one embodiment of the present invention.

Referring to FIG. 1, the electric vehicle charging system using a charging module according to one embodiment of the present invention may include a plurality of first charging module groups 1000 and a plurality of second charging modules 200.

Here, the electric vehicle charging system using a charging module illustrated in FIG. 1 is according to one embodiment, and components thereof are not limited to the embodiment illustrated in FIG. 1, and may be added, changed, or deleted as necessary.

In one embodiment, the first charging module group 1000 may be installed within a predetermined area, and may include a plurality of first charging modules 100₀ to 100_{N} fixedly disposed on the same line in a first direction.

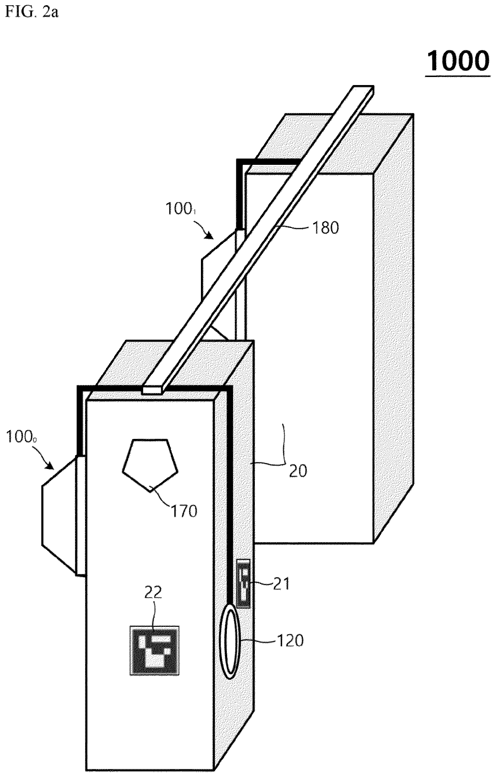

More specifically, in various embodiments, as illustrated in FIG. 2A, each of the plurality of first charging modules 100₀ to 100_{N} may be installed in the form of being fixed to pillars 20 disposed in an underground parking lot, and a plurality of first charging modules 100₀ to 100_{N} installed on pillars 20 located on the same line in the first direction among the plurality of pillars 20 may be grouped as one first charging module group 1000. That is, the electric vehicle charging system using a charging module may include a plurality of first charging module groups 1000 each including a plurality of first charging modules 100₀ to 100_{N} disposed on the same line in the first direction within a predetermined area. However, the electric vehicle charging system is not limited thereto.

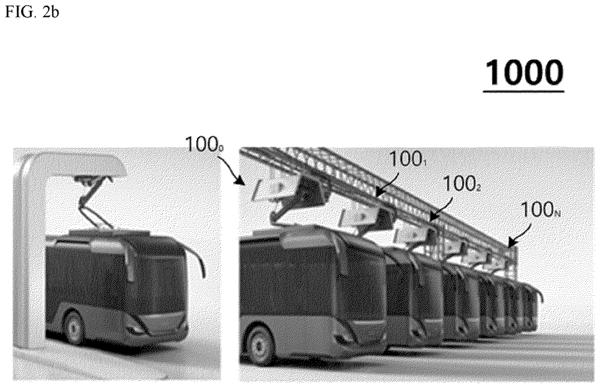

In various embodiments, as illustrated in FIG. 2B, a separate structure may be installed in the first direction within the predetermined area, and each of the plurality of first charging modules 100₀ to 100_{N} may be installed in the form of being fixed to the structure installed in the first direction.

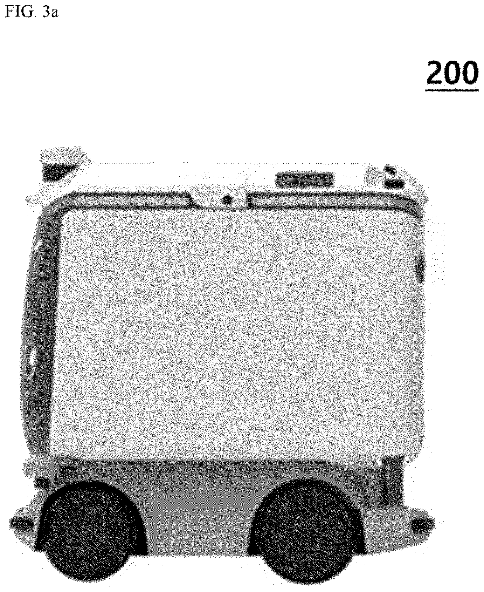

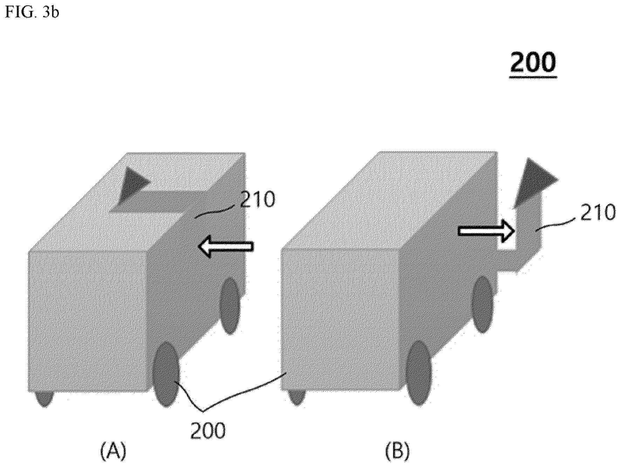

In various embodiments, the plurality of first charging modules 100₀ to 100_{N} included in the first charging module group 1000 may include a charging gun-shaped connector (e.g., a first connector 110 in FIG. 3) on one side in order to be electrically connected to the electric vehicle 10, and may be electrically connected to the electric vehicle 10 through the charging gun-shaped connector. However, the first charging modules are not limited thereto, and when each of the plurality of first charging modules 100₀ to 100_{N} is fixedly installed on the structure as illustrated in FIG. 2B, the first charging module may supply electric power to the electric vehicle 10 by being connected to the electric vehicle 10 by wire, and may also supply electric power to the electric vehicle 10 wirelessly through a wireless power transmission module.

In various embodiments, a representative first charging module 100₀ among the plurality of first charging modules 100₀ to 100_{N} may include a docking socket-shaped connector (e.g., a second connector 120) on the other side in order to be electrically connected to the second charging module 200, which will be described below, and may be electrically connected to the second charging module 200 through the docking socket-shaped second connector 120.

Here, the representative first charging module 100₀ may be a charging module installed at the location closest to the preset line among the plurality of first charging modules 100₀ to 100_{N} included in one first charging module group 1000, that is, the charging module located on the leftmost or rightmost among the plurality of first charging modules 100₀ to 100_{N}, or a charging module located at the forefront in the first direction among the plurality of first charging modules 100₀ to 100_{N}. However, the representative first charging module is not limited thereto.

In addition, here, the docking socket-shaped second connector 120 may be included only in the representative first charging module 1000, and may not be included in the other first charging modules 100₁ to 100_{N}, but is not limited thereto.

In various embodiments, the representative first charging module 100₀ among the plurality of first charging modules 100₀ to 100_{N} may include a laser output module 170 for outputting a laser beam on one side, and may generate a line laser as the preset line at a location adjacent to the representative first charging module 100₀ by emitting a laser beam into a predetermined area through a laser output module 170. However, the laser output module 170 is not limited thereto, and may be installed in a separate space within the predetermined area. For example, the laser output module 170 may be installed on the ceiling inside an underground parking lot.

In addition, in the present specification, it is described that the line laser is generated using the laser output module 170 for the purpose of guiding a movement path of the second charging module 200, but the present invention is not limited thereto, and a method in which the movement path for the second charging module 200 is set in advance (for example, the movement path is set based on a map and coordinate values inside the underground parking lot) and the second charging module 200 travels along the preset movement path based on a control command may be applied.

In addition, for the purpose of guiding the movement path of the second charging module 200, a method in which colors may be displayed along the movement path of the second charging module 200, such as colored tape attached or paint applied inside the underground parking lot, and the second charging module 200 is controlled to move by following the color displayed on the movement path through a color sensor may be applied.

In addition, the second charging module 200 may be equipped with a magnetic sensor capable of detecting a magnetic marker, and a method of determining a current location and controlling the movement operation of the second charging module using a magnetic landmark configured based on information about the magnetic marker detected through the magnetic sensor may be applied.

In various embodiments, a marker may be attached to at least a portion of the pillar 20 on which the representative first charging module 100₀ among the plurality of first charging modules 100₀ to 100_{N} is installed. For example, in the pillar 20 on which the representative first charging module 100₀ is installed, a first marker 21 may be attached at a location adjacent to the second connector 120, and the second marker 22 may be attached to at least a portion of a surface facing the preset line among several surfaces of the pillar 20.

Here, the first marker 21 may include information on the representative first charging module 100₀, or may include a link (e.g., URL) providing information on the representative first charging module 100₀. In addition, here, the second marker 22 may include information on a location within the predetermined area. That is, by identifying the first marker 21, information on the representative first charging module 100₀ installed in a current adjacent location may be obtained, and by identifying the second marker 22, information on the current location within the predetermined area may be obtained.

In one embodiment, the second charging module 200 may be disposed within a predetermined area, and may perform a movement operation according to a control command. For example, as illustrated in FIG. 3A, the second charging module 200 may include a separate movement means, and when receiving a call from the outside, may set a location where the call is received as a destination point and perform a movement operation to move along a path from a current location to the destination point through the movement means.

In various embodiments, the second charging module 200 travels within the predetermined area according to the control command, but may only move along a preset line in a second direction. However, the second charging module 200 is not limited thereto.

In various embodiments, the second charging module 200 may be connected to the first charging module group 1000 to supply electric power to a first charging module connected to the electric vehicle 10 among the plurality of first charging modules 100₀ to 100_{N} included in the first charging module group 1000, but is not limited thereto, and in some cases, may be directly connected to the electric vehicle 10 to directly supply electric power to the electric vehicle 10.

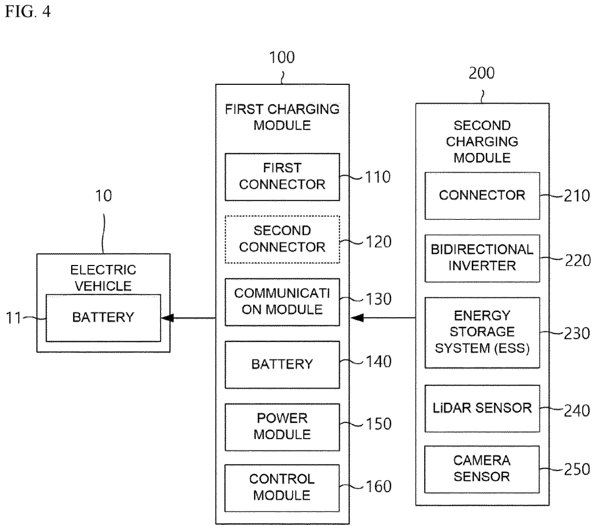

In various embodiments, the second charging module 200 may include a connector (e.g., 210 in FIG. 4) for coupling with the second connector 120 of the representative first charging module 100₀. In this case, in order to prevent the connector 210 of the second charging module 200 from being damaged, destroyed, or impacting a parked vehicle or person by the connector 210 as the second charging module 200 performs the movement operation, the connector 210 may be inserted into a housing as illustrated in (A) of FIG. 3B until the representative first charging module 100₀ is identified, and the connector 210 may protrude out of the housing as illustrated in (B) of FIG. 3B at the time when the representative first charging module 100₀ is identified.

Here, the second charging module 200 may be a portable energy storage system (ESS) module that has a large capacity battery therein and supplies electric power stored in the battery to the outside through a power module, but is not limited thereto.

In addition, here, the plurality of first charging modules 100₀ to 100_{N} and the second charging module 200 may include the same configuration, with only the difference in the shape or installation method (e.g., fixed or mobile) of housings containing respective components, but are not limited thereto.

In various embodiments, each of the plurality of first charging modules 100₀ to 100_{N} may be implemented as one of an energy storage system (ESS) form, a dummy form, or a form capable of autonomous low-speed charging operation. Hereinafter, the present invention will be described with reference to FIGS. 4 to 6.

FIG. 4 is a diagram illustrating a first charging module in the form of an energy storage system (ESS), in various embodiments.

Referring to FIG. 4, a first charging module 100 (e.g., the plurality of first charging modules 100₀ to 100_{N}) according to a first embodiment, that is, the first charging module 100 in the form of the ESS, may include a first connector 110, a second connector 120, a communication module 130, a battery 140, a power module 150, and a control module 160. However, the first charging module 100 is not limited thereto.

In one embodiment, the first connector 110 may be implemented in the form of a charging gun and the first charging module 100 may be electrically connected to an electric vehicle 10 through the first connector 110. However, the first connector 110 is not limited thereto, and may be implemented in the form that is included in a wireless charging module (not illustrated) disposed on each parking surface where the electric vehicle 10 may be parked and is electrically connected to the electric vehicle 10 by being brought out to the outside (e.g., toward the electric vehicle 10) according to a user request (e.g., a wired charging request) and being docked with the electric vehicle 10.

In various embodiments, the first charging module 100 may include two or more first connectors 110, and may be electrically connected to two or more different electric vehicles 10 through the two or more first connectors 110.

In one embodiment, the second connector 120 may be implemented in the form of a docking socket, and the first charging module 100 may be electrically connected to the second charging module 200 through the second connector 120. Here, the second connector 120 may be formed in a DC combo form, but is not limited thereto. Here, the second connector 120 may be included only in a representative first charging module 100₀ among a plurality of first charging modules 100₀ to 100_{N}, but is not limited thereto.

In one embodiment, the communication module 130 may call the second charging module 200. For example, when the communication module 130 is connected to the electric vehicle 10 through the first connector 110, the communication module 130 may call the second charging module 200 located in an adjacent location through a short-range wireless communication method (e.g., Bluetooth or the like). Here, the communication module 130 may be a supply equipment communication controller (SECC), but is not limited thereto. In addition, here, the communication module 130 may perform communication using at least one of a call method through direct communication and a method of issuing a command from the computing device 400 through a QR code or the like, but is not limited thereto.

In one embodiment, the battery 140 may be a built-in battery provided inside the first charging module 100, and may store electric power supplied from the second charging module 200 connected through the second connector 120.

In one embodiment, the power module 150 may convert the electric power supplied from the second charging module 200 and transmit the converted electric power to the battery 140, and convert the electric power stored in the battery 140 and supply the converted electric power to the electric vehicle 10.

In one embodiment, the control module 160 may output control commands for controlling the operation of each component (e.g., the first connector 110, the second connector 120, the communication module 130, the battery 140, and the power module 150) included in the first charging module 100. For example, when an electrical connection to the electric vehicle 10 is detected through the first connector 110, the control module 160 may control the communication module 130 to output a call signal to the second charging module 200. To this end, the first charging module 100 may further include a separate control power source (e.g., a 12 V power source).

In one embodiment, the second charging module 200 may supply electric power to the first charging module 100 according to the first embodiment as the second charging module 200 is electrically connected to the first charging module 100 according to the first embodiment. To this end, the second charging module 200 may include a connector 210, a bidirectional inverter 220, an electric storage device (ESS) 230, a LiDAR sensor 240, and a camera sensor 250.

In various embodiments, the second charging module 200 may be connected to the first charging module 100 through the connector 210. To this end, the connector 210 of the second charging module 200 may be implemented in the form that may be connected to the second connector 120 in the form of a docking socket. However, the connector 210 is not limited thereto.

In various embodiments, the bidirectional inverter 220 of the second charging module 200 may convert alternating current (AC) power to direct current (DC) power or DC power to AC power. For example, the electric power previously stored in the electric storage device 230 may be converted to DC power and the converted DC power may be supplied to the first charging module 100, and the DC power provided from the outside may be converted to AC power and the converted AC power may be stored in the electric storage device 230.

In various embodiments, the LiDAR sensor 240 of the second charging module 200 may collect LiDAR sensor data for a predetermined area, and may analyze the collected sensor data and recognize the location of the second charging module 200.

In various embodiments, the camera sensor 250 of the second charging module 200 may be operated based on the location recognized through the LiDAR sensor 240 so that a first marker 21 and a second marker 22 attached to a pillar 20 is identified, and may acquire image data by photographing the second connector 120 of the first charging module 100.

That is, the first charging module 100 according to the first embodiment may be implemented in the form of charging the battery 140 using the electric power supplied from the second charging module 200 as the first charging module 100 is electrically connected to the second charging module 200 and supplying the electric power charged in the battery 140 to the electric vehicle through the power module 150.

Here, the first charging module 100 according to the first embodiment is described as supplying the electric power supplied from the second charging module 200 to the electric vehicle 10 by wire through the first connector 110, but is not limited thereto, and the first charging module 100 may further include a wireless charging module (not illustrated) disposed on each parking surface where the electric vehicle 10 may be parked, and may wirelessly supply the electric power supplied from the second charging module 200 to the electric vehicle 10 through the wireless charging module, that is, the first connector 110 and the wireless charging module may be selectively used to supply electric power to the electric vehicle 10, or the first connector 110 and the wireless charging module may be simultaneously used to supply the electric power supplied from the second charging module 200 to the electric vehicle.

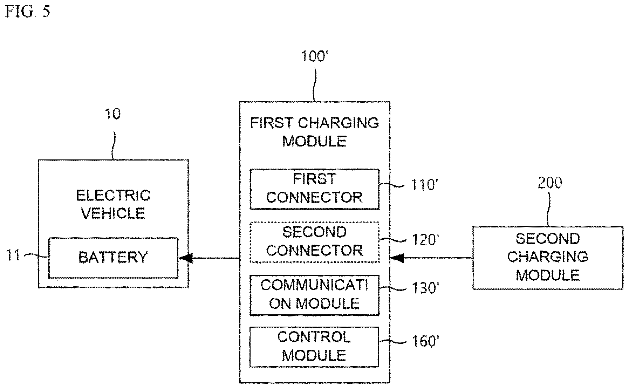

FIG. 5 is a diagram illustrating a first charging module in a dummy form in various embodiments.

Referring to FIG. 5, a first charging module 100' (e.g., the plurality of first charging modules 100₀ to 100_{N}) according to a second embodiment, that is, the first charging module 100' in a dummy form, may include a first connector 110', a second connector 120', a communication module 130', a battery 140', a power module 150', and a control module 160'. However, the first charging module 100' is not limited thereto.

In one embodiment, the first connector 110' may be implemented in the form of a charging gun and the first charging module 100' may be electrically connected to an electric vehicle 10 through the first connector 110'. Here, the first connector 110' according to the second embodiment may be implemented in the same form as the first connector 110 according to the first embodiment, but is not limited thereto.

In one embodiment, the second connector 120' may be implemented in the form of a docking socket, and the first charging module 100' may be electrically connected to the second charging module 200 through the second connector 120'. Here, the second connector 120' according to the second embodiment may be implemented in the same form as the second connector 120 according to the first embodiment, but is not limited thereto.

In one embodiment, the communication module 130' (e.g., a supply equipment communication controller (SECC)) may call the second charging module 200. Here, the communication module 130' according to the second embodiment may be implemented in the same form as the communication module 130 according to the first embodiment, but is not limited thereto.

In one embodiment, the control module 160' may output control commands for controlling the operations of each component (e.g., the first connector 110', the second connector 120', and the communication module 130') included in the first charging module 100'. Here, the control module 160' according to the second embodiment may be implemented in the same form as the control module 160 according to the first embodiment.

That is, the first charging module 100' according to the second embodiment may be implemented in the form of transmitting only the electric power supplied from the second charging module 200 to the electric vehicle 10 without electric power supply of an external power source (e.g., 300 in FIG. 4) as the first charging module 100' is electrically connected to the second charging module 200.

Here, the first charging module 100' according to the second embodiment is described as supplying the electric power supplied from the second charging module 200 to the electric vehicle 10 by wire through the first connector 110', but is not limited thereto, and the first charging module 100' may further include a wireless charging module (not illustrated) disposed on each parking surface where the electric vehicle 10 may be parked, and may wirelessly supply the electric power supplied from the second charging module 200 to the electric vehicle 10 through the wireless charging module, that is, the first connector 110' and the wireless charging module may be selectively used to supply electric power to the electric vehicle 10, or the first connector 110' and the wireless charging module may be simultaneously used to supply the electric power supplied from the second charging module 200 to the electric vehicle.

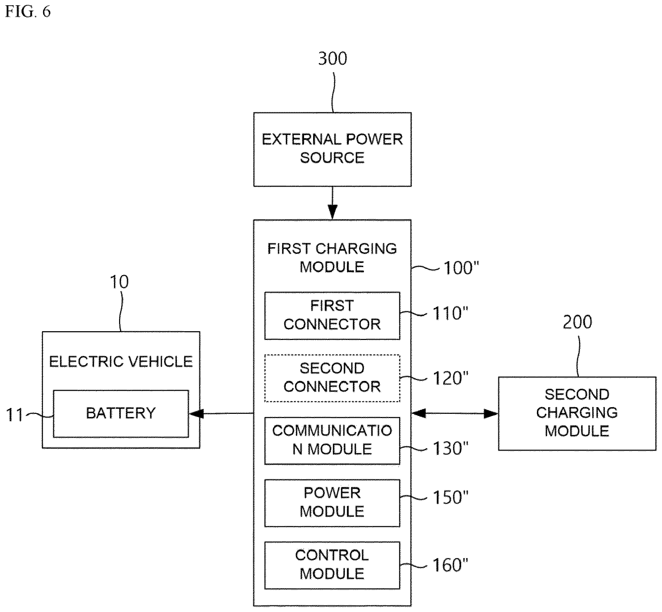

FIG. 6 is a diagram illustrating a first charging module in the form capable of autonomously performing a low-speed charging operation in various embodiments.

Referring to FIG. 6, a first charging module 100" (e.g., the plurality of first charging modules 100₀ to 100_{N}) according to a third embodiment, that is, the first charging module 100" capable of a low-speed charging operation, may include a first connector 110", a second connector 120", a communication module 130", a power module 150", and a control module 160". However, the first charging module 100" is not limited thereto.

In one embodiment, the first connector 110" may be implemented in the form of a charging gun and the first charging module 100" may be electrically connected to an electric vehicle 10 through the first connector 110". Here, the first connector 110" according to the third embodiment may be implemented in the same form as the first connector 110 according to the first embodiment, but is not limited thereto.

In one embodiment, the second connector 120" may be implemented in the form of a docking socket, and the first charging module 100" may be electrically connected to the second charging module 200 through the second connector 120". Here, the second connector 120" according to the third embodiment may be implemented in the same form as the second connector 120 according to the first embodiment, but is not limited thereto.

In one embodiment, the communication module 130" (e.g., a supply equipment communication controller (SECC)) may call the second charging module 200. Here, the communication module 130" according to the third embodiment may be implemented in the same form as the communication module 130 according to the first embodiment, but is not limited thereto.

In one embodiment, the power module 150" may convert electric power supplied from an external power source 300 and supply the converted electric power to the electric vehicle 10. For example, the power module 150" may receive 22 kW AC 3-phase power supplied from the external power source 300 and convert the 22 kW AC 3-phase power into 20 kW DC to supply electric power for low-speed charging to the electric vehicle 10. To this end, the power module 150" may include an AC/DC converter. However, the type of converter included in the power module 150" is not limited thereto, and may include various types of converters (e.g., a direct current (DC)/DC converter for supplying DC power from the battery to the electric vehicle 10). The DC/DC converter may be used especially when an external power source 300 is a power source capable of supplying DC or when an external DC battery is charged with the electric power of the electric vehicle 10.

In addition, the power module 150" may supply electric power for high-speed charging to the electric vehicle 10 by adding the electric power supplied from the second charging module 200 and the electric power supplied through the external power source 300.

In one embodiment, the control module 160" may output control commands for controlling the operation of each component (e.g., the first connector 110", the second connector 120", the communication module 130", and the power module 150") included in the first charging module 100". Here, the control module 160" according to the third embodiment may be implemented in the same form as the control module 160 according to the first embodiment.

That is, the first charging module 100" according to the third embodiment may convert the electric power supplied from the external power source 300 and provide the converted electric power as the first charging module 100" is connected to the electric vehicle 10, thereby allowing low-speed charging of the electric vehicle 10, and may provide the electric power obtained by adding the electric power supplied from the external power source 300 and the electric power supplied from the second charging module 200 as the second charging module 200 is connected, thereby allowing high-speed charging of the electric vehicle 10.

Here, the first charging module 100" according to the third embodiment is described as supplying the electric power supplied from the second charging module 200 to the electric vehicle 10 through the first connector 110" with priority, but is not limited thereto, and the first charging module 100" may further include a wireless charging module (not illustrated) disposed on each parking surface where the electric vehicle 10 may be parked, and may wirelessly supply the electric power supplied from the second charging module 200 to the electric vehicle 10 through the wireless charging module, that is, the first connector 110" and the wireless charging module may be selectively used to supply electric power to the electric vehicle 10, or the first connector 110" and the wireless charging module may be simultaneously used to supply the electric power supplied from the second charging module 200 to the electric vehicle.

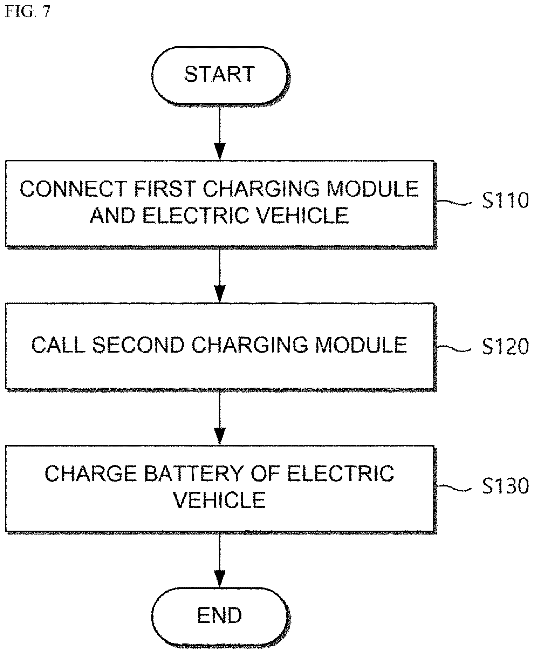

In addition, the first charging module 100 according to the first embodiment, the first charging module 100' according to the second embodiment, and the first charging module 100" according to the third embodiment are each described as including different components, but are not limited thereto, and one first charging module including all components included in each of the first charging module 100 according to the first embodiment, the first charging module 100' according to the second embodiment, and the first charging module 100" according to the third embodiment may be implemented, where the one first charging module may be implemented in such a way that only specific components are selectively driven depending on an operating state. For example, when it is intended to operate the first charging module in a dummy form, only the first connector, the second connector, the communication module, and the control module may be controlled to operate, and when it is intended to operate the first charging module in a low-speed/high-speed charging mode, the first connector, the second connector, the communication module, the power module, and the control module may be controlled to operate. Hereinafter, with reference to FIGS. 7 to 10, a method of charging an electric vehicle using a charging module and a method of charging an electric vehicle at low and high speeds using a charging module will be described.

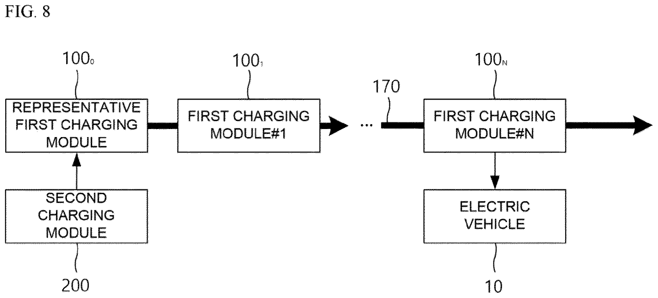

FIG. 7 is a flowchart of a method of charging an electric vehicle using a charging module according to another embodiment of the present invention, and FIG. 8 is a diagram illustrating a process of charging an electric vehicle using a charging module in various embodiments.

The method of charging an electric vehicle using a charging module illustrated in FIGS. 7 and 8 is described as being performed by a computing device 400. Here, the computing device 400 may refer to a control module 160 provided in each of a first charging module 100 (e.g., the plurality of first charging modules 100₀ to 100_{N}) and a second charging module 200 to control the operation of each charging module, but is limited thereto, and the computing device 400 may be a computing hardware device that is separately provided outside the first charging module 100 and the second charging module 200 to perform the process of charging an electric vehicle using a charging module.

In addition, in some cases, the method of charging an electric vehicle using a charging module may be implemented in the form of using the control module 160 provided in each charging module to control the operation of the first charging module 100 and the second charging module 200 together with the computing device 400 that is separately provided externally.

In addition, before performing the method of charging an electric vehicle using a charging module, the computing device 400 may provide a user interface (UI) for outputting usage status and power reserve status of each of a plurality of first charging modules 100₀ to 100_{N} and a plurality of second charging modules 200 provided within a predetermined area, information about places where an electric vehicle may be charged, and the like to a user terminal or a display device provided within the predetermined area, and in this way, the computing device 400 may assist the user so that the user is able to more easily and conveniently use the method of charging an electric vehicle using a charging module.

Referring to FIGS. 7 and 8, in step S110, the computing device 400 may detect a connection between the first charging module 100 and an electric vehicle 10. For example, a user who wants to charge the electric vehicle 10 connects a first connector 110 of any one (e.g., a first charging module#N 100_{N}) of a plurality of first charging modules 100₀ to 100_{N} and a connector of the electric vehicle 10, thereby electrically connecting the first charging module#N 100_{N} and the electric vehicle 10, and the computing device 400 may determine whether the first charging module#N 100_{N} and the electric vehicle 10 are connected through an electrical connection state between the first charging module#N 100_{N} and the electric vehicle 10.

Here, the plurality of first charging modules 100₀ to 100_{N} may be the first charging module 100 according to the first embodiment illustrated in FIG. 4 and the first charging module 100' according to the second embodiment illustrated in FIG. 5, but are not limited thereto.

In step S120, when it is determined that the first charging module#N 100_{N} of the plurality of first charging modules 100₀ to 100_{N} and the electric vehicle 10 are connected through step S 110, the computing device 400 may call the second charging module 200.

In various embodiments, when it is determined that the first charging module#N 100_{N} and the electric vehicle 10 are connected, the computing device 400 may call a second charging module 200 located at the most adjacent location among the plurality of second charging modules 200 with top priority. In this case, the computing device 400 may filter the second charging module 200 to be called in consideration of a charge amount of a battery of the electric vehicle 10 (e.g., may filter a second charging module 200 that is difficult to supply enough electric power to charge the battery of the electric vehicle 10).

In various embodiments, when it is determined that the first charging module#N 100_{N} and the electric vehicle 10 are connected, the computing device 400 may call a second charging module 200 with a battery having the largest charge amount among the plurality of second charging modules 200 with priority. However, the present invention is not limited thereto.

In various embodiments, when a display is provided in at least a portion of the first charging module#N 100_{N}, the computing device 400 may provide a user interface (UI) for user authentication through the display as it is determined that the first charging module#N 100_{N} and the electric vehicle 10 are connected, and may call the second charging module 200 in response to the user performing a user authentication procedure through the UI.

In various embodiments, when the display is not provided in at least a portion of the first charging module#N 100_{N}, the computing device 400 may be connected to the user terminal through a network, may provide the UI for user authentication to the user terminal, and may call the second charging module 200 in response to the user performing the user authentication procedure through the UI.

Here, the user terminal may be a wireless communication device that guarantees portability and mobility, including all types of handheld-based wireless communication devices, such as a navigation, personal communication system (PCS), a global system for mobile communications (GSM), personal digital cellular (PDC), a personal handyphone system (PHS), a personal digital assistant (PDA), international mobile telecommunication (IMT)-2000, code division multiple access (CDMA)-2000, W-code division multiple access (W-CDMA), or a wireless broadband Internet (Wibro) terminal, a smartphone, a smartpad, a tablet PC, or the like, but is not limited thereto.

In addition, here, the network refers to a connection structure that allows information exchange between each node, such as a plurality of terminals and servers, and examples of the network may include a local area network (LAN), a wide area network (WAN), Internet (World Wide Web (WWW)), wired and wireless data communication networks, a telephone network, a wired and wireless television communication network, and the like. In addition, the wireless data communication network may include 3G, 4G, 5G, 3rd generation partnership project (3GPP), 5th generation partnership project (5GPP), long term evolution (LTE), world interoperability for microwave access (WIMAX), Wi-Fi, Internet, a local area network (LAN), a wireless local area network (Wireless LAN), a wide area network (WAN), a personal area network (PAN), radio frequency (RF), a Bluetooth network, a near-field communication (NFC) network, a satellite broadcasting network, an analog broadcasting network, a digital multimedia broadcasting (DMB) network, and the like, but is not limited thereto.

In step S130, the computing device 400 may control the second charging module 200 to move along a line preset in a second direction in response to calling the second charging module 200, and may charge the battery of the electric vehicle 10 using electric power of the second charging module 200 as the second charging module 200 moves to and electrically connects to the first charging module#N 100_{N}.

More specifically, each of the plurality of first charging module groups 1000 located within a predetermined area may include a plurality of representative first charging modules 100₀, and the computing device 400 may control the operation of a plurality of laser output modules 170 included in each of the plurality of representative first charging modules 100₀ to emit laser beams, so that a laser line in the second direction for guiding the movement operation of the second charging module 200 may be generated. However, the present invention is not limited, and the laser output module 170 may be provided in a separate space outside the plurality of representative first charging modules 100₀.

Then, the computing device 400 may control the second charging module 200 to move along the preset line (laser line) to a called location.

In various embodiments, the computing device 400 may collect LiDAR sensor data for the predetermined area through the LiDAR sensor 240 of the second charging module 200, may recognize the location of the second charging module 200 by analyzing the collected LiDAR sensor data, may identify a second marker 22 at the most adjacent location by operating the camera sensor 250 according to the current location of the second charging module 200, may generate a movement path for moving to the called location by determining the current location of the second charging module 200 through the identified second marker 22, and may control the movement operation of the second charging module 200 to move along the movement path.

Then, the computing device 400 may collect LiDAR sensor data for the predetermined area through the LiDAR sensor 240 while the second charging module 200 moves along a preset line, may recognize a real-time location of the second charging module 200 by analyzing the collected LiDAR sensor data, and may operate the camera sensor 250 to identify a first marker 21 as the second charging module 200 is located adjacent to a pillar 20.

In this case, the computing device 400 may determine whether a representative first charging module 100₀ located adjacent to the second charging module 200 is a representative first charging module 100₀ of the first charging module group 1000 including the first charging module#N 100_{N} that has called the second charging module 200 based on the information collected through the identified first marker 21, and may determine whether to operate the camera sensor 250 according to a determination result.

Then, the computing device 400 may analyze image data (e.g., image data obtained by photographing the second connector 120 included in the representative first charging module 100₀) generated as the camera sensor 250 operates and control the operation so that the second connector 120 included in the representative first charging module 100₀ and the connector 210 of the second charging module 200 are coupled, thereby performing control so that the representative first charging module 100₀ and the second charging module 200 are electrically connected.

Then, the computing device 400 may ensure that the electric power supplied from the second charging module 200 is supplied to the first charging module#N 100_{N} (e.g., the charging module electrically connected to the electric vehicle 10) through the representative first charging module 100₀, thereby charging the battery of the electric vehicle 10 using the electric power of the second charging module 200.

Since the first charging module#N 100_{N} connected to the electric vehicle 10 is connected to other first charging modules 100₀ to 100_{N-1} included in the first charging module group 1000 to which the first charging module#N 100_{N} belongs through one power line, even when the second charging module 200 is connected to any one of the plurality of first charging modules 100₀ to 100_{N} included in the first charging module group 1000, electric power may be supplied and distributed to the other first charging modules through the one power line.

Therefore, when the computing device 400 wants to supply electric power to the first charging module#N 100_{N}, the computing device 400 may call the second charging module 200 and connect the representative first charging module 100₀ of the first charging module group 1000 to which the first charging module#N 100_{N} belongs and the second charging module 200, and supply the electric power from the second charging module 200 to the first charging module#N 100_{N} through one power line connecting the representative first charging module 100₀ and the first charging module#N 100_{N}. However, the present invention is not limited thereto.

In various embodiments, the computing device 400 may select the first charging modules 100₀ to 100_{N} to be electrically connected to the second charging module 200 according to a charging method for the electric vehicle 10. For example, when the computing device 400 obtains a low-speed charging request for the electric vehicle 10 from the user or fails to obtain separate instructions for the charging method, the computing device 400 may control the operation of the second charging module 200 so that the second charging module 200 and the representative first charging module 100₀ are connected as described above. Meanwhile, when the computing device 400 obtains a high-speed charging request for the electric vehicle 10 from the user, the computing device 400 may control the operation of the second charging module 200 so that the second charging module 200 is directly connected to the first charging module#N 100_{N} connected to the electric vehicle 10. In this case, the computing device 400 may perform control so that the second charging module and the charging module#N 100_{N} connected to the electric vehicle 10 are connected 1:1 by electrically disconnecting the first charging module#N 100_{N} connected to the electric vehicle 10 from the first charging module located at the location adjacent to the first charging module#N 100_{N}.

In various embodiments, when the plurality of first charging modules 100₀ to 100_{N} are implemented in the form of an ESS (e.g., the first charging module 100 according to the first embodiment illustrated in FIG. 4), the computing device 400 may charge the battery 140 of the plurality of first charging modules 100₀ to 100_{N} using electric power supplied from the second charging module 200 by controlling the operation of the plurality of first charging modules 100₀ to 100_{N}, and may charge the battery 11 of the electric vehicle 10 by supplying the electric power charged in the battery 140 to the electric vehicle 10 through the power module 150.

Here, when the plurality of first charging modules 100₀ to 100_{N} are implemented in the form of the ESS (e.g., the first charging module 100 according to the first embodiment illustrated in FIG. 4), the electric power may be supplied to the electric vehicle 10 using the already charged battery 140 before the second charging module 200 called through step S120 is connected to the plurality of first charging modules 100₀ to 100_{N}.

In addition, when the plurality of first charging modules 100₀ to 100_{N} are implemented in the form of the ESS (e.g., the first charging module 100 according to the first embodiment illustrated in FIG. 4), the first charging module 100 may supply surplus electric power (e.g., 7 kW) to the second charging module 200 using the already charged battery 140 when the first charging modules 100 are not connected to the electric vehicle 10, thereby charging a battery of the second charging module 200.

In various embodiments, when the plurality of first charging modules 100₀ to 100_{N} are implemented in a dummy form (e.g., the first charging module 100' according to the second embodiment illustrated in FIG. 5), the computing device 400 may transmit the electric power supplied from the second charging module 200 through a second connector 120' to the electric vehicle 10 through a first connector 110' by controlling the operation of the plurality of first charging modules 100₀ to 100_{N}, thereby charging the battery 11 of the electric vehicle 10.

Here, the computing device 400 is described as supplying electric power to the electric vehicle 10 through the first connector 110, but is not limited thereto, and may wirelessly supply electric power through a wireless charging module or simultaneously perform wired supply through the first connector 110 and wireless supply through the wireless charging module.

In various embodiments, the computing device 400 may obtain a wireless charging request or wired charging request for the electric vehicle 10 from the user, may wirelessly supply AC power to the electric vehicle 10 through the wireless charging module when the wireless charging request is obtained from the user, and may supply DC power to the electric vehicle 10 by wire through the first connector 110 when the wired charging request is obtained. For example, the second charging module 200 may include a converter (e.g., an AC/DC converter or the like), and as the wireless charging request is obtained from the user, the computing device 400 may convert DC power into AC power by controlling the operation of the second charging module 200, and may receive the converted AC power from the second charging module 200 and wirelessly supply the received AC power to the electric vehicle 10. In addition, the wired charging request is obtained from the user, the computing device 400 may receive DC power as it is from the second charging module 200 and supply the received DC power to the electric vehicle 10 by wire.

Here, it is described that the converter is included in the second charging module 200 to convert the form of electric power according to the wireless charging request and the wired charging request, but the location of the converter is not limited thereto, and the first charging module 100 (e.g., the plurality of first charging modules 100₀ to 100_{N}) may include the converter to convert the electric power supplied from the second charging module 200 into an appropriate form according to a wireless or wired charging request and supply the converted electric power to the electric vehicle 10 wirelessly or by wire. For example, as the computing device 400 obtains the wireless charging request from the user, the computing device 400 may convert the DC power supplied from the second charging module 200 into AC power and wirelessly supply the converted DC power to the electric vehicle 10 through the wireless charging module by controlling the operation of the first charging module 100, and as the computing device 400 obtains the wired charging request from the user, the computing device 400 may supply the DC power supplied from the second charging module 200 to the electric vehicle 10 through the first connector 110 by wire.

In addition, in some cases, the converter may be included in both the first charging module 100 and the second charging module 200, and depending on the situation, the electric power may be converted using the converter included in either the first charging module 100 or the second charging module 200.

In various embodiments, when one first charging module 100 (e.g., the plurality of first charging modules 100₀ to 100_{N}) includes two or more first connectors 110 and two or more different electric vehicles 10 are connected to each of the two or more first connectors 110, the computing device 400 may simultaneously supply electric power to the two or more electric vehicles 10 using the two or more first connectors 110, but is not limited thereto, and the computing device 400 may sequentially supply electric power based on a charging deadline for each of the two or more electric vehicles 10, starting with an electric vehicle 10 with a shorter charging deadline.

In addition, when two or more different electric vehicles 10 are connected to each of the two or more first connectors 110, the computing device 400 may independently set a power supply method (e.g., low-speed charging or high-speed charging) for each of the two or more electric vehicles 10, and may independently supply electric power to each of the two or more electric vehicles 10 according to the power supply method set for each of the two or more electric vehicles 10 based on set values.

In various embodiments, the computing device 400 may call the second charging module 200 as the plurality of first charging modules 100₀ to 100_{N} and the electric vehicle 10 are electrically connected, wherein the number of second charging modules 200 to be called may be determined according to the number of first charging modules connected to the electric vehicle 10, that is, a required electric power level.

In various embodiments, the computing device 400 may provide information about the electric vehicle 10 that is being charged (e.g., vehicle number, charging state, charge amount, cost information, or the like) through the UI output through displays provided in the plurality of first charging modules 100₀ to 100_{N} or a display of the user terminal.

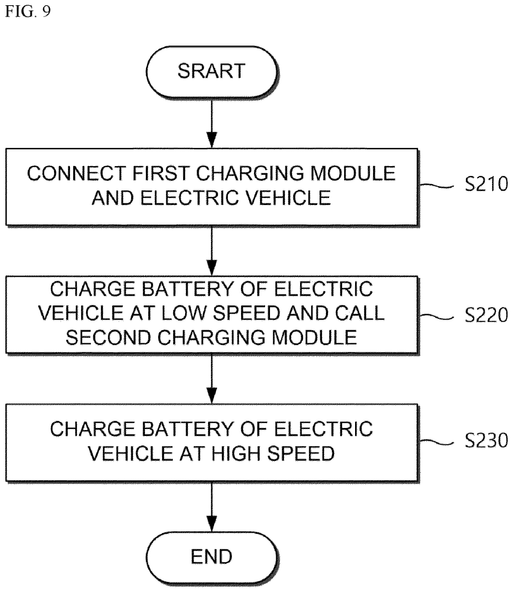

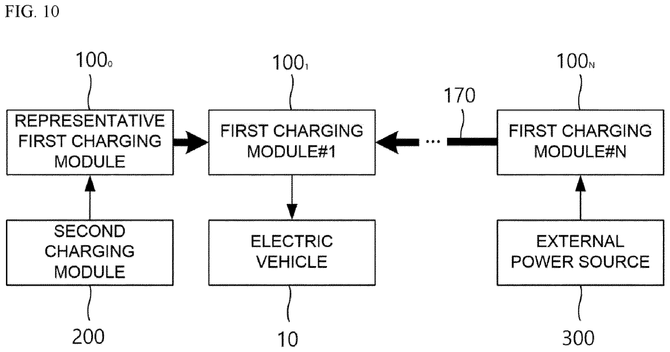

FIG. 9 is a flowchart of a method of charging an electric vehicle at low and high speeds using a charging module according to still another embodiment of the present invention, and FIG. 10 is a diagram illustrating a process of charging an electric vehicle at low and high speeds using a charging module in various embodiments.

The method of charging an electric vehicle at low and high speeds using a charging module illustrated in FIGS. 9 and 10 is described as being performed by a computing device 400. Here, the computing device 400 may refer to a control module 160 provided in each of a first charging module 100 (e.g., the plurality of first charging modules 100₀ to 100_{N}) and a second charging module 200 to control the operation of each charging module, but is limited thereto, and the computing device 400 may be a computing hardware device that is separately provided outside the first charging module 100 and the second charging module 200 to perform the process of charging an electric vehicle using a charging module.

In addition, in some cases, the method of charging an electric vehicle at low and high speeds using a charging module may be implemented in the form of using the control module 160 provided in each charging module to control the operation of the first charging module 100 and the second charging module 200 together with the computing device 400 that is separately provided externally.

In addition, before performing the method of charging an electric vehicle at low and high speeds using a charging module, the computing device 400 may provide a user interface (UI) for outputting usage status and power reserve status of each of a plurality of first charging modules 100₀ to 100_{N} and a plurality of second charging modules 200 provided within a predetermined area, information about places where an electric vehicle may be charged, and the like to a user terminal or a display device provided within the predetermined area, and in this way, may assist the user so that the user is able to more easily and conveniently use the method of charging an electric vehicle at low and high speeds using a charging module.

Referring to FIGS. 9 and 10, in step S210, the computing device 400 may detect a connection between the first charging module 100 and an electric vehicle 10. For example, a user who wants to charge the electric vehicle 10 connects a first connector 110 of any one (e.g., a first charging module#1 100₁) of a plurality of first charging modules 100₀ to 100_{N} and a connector of the electric vehicle 10, thereby electrically connecting the first charging module#1 100₁ and the electric vehicle 10, and the computing device 400 may determine whether the first charging module#1 100₁ and the electric vehicle 10 are connected through an electrical connection state between the first charging module#1 100₁ and the electric vehicle 10.

Here, the plurality of first charging modules 100₀ to 100_{N} may be the first charging module 100" according to the third embodiment illustrated in FIG. 6, but are not limited thereto.

In step S220, when it is determined that the first charging module#1 100₁ of the plurality of first charging modules 100₀ to 100_{N} and the electric vehicle 10 are connected through step S110, the computing device 400 may supply a first level of electric power to the electric vehicle 10 by operating a low-speed charging mode. For example, a first charging module#N 100_{N} connected at the last end in a first direction among the plurality of first charging modules 100₀ to 100_{N} may be connected to an external power source 300, and when it is determined that the first charging module#1 100₁ and the electric vehicle 10 are connected, the computing device 400 may convert AC power (e.g., 22 kW AC three-phase power) supplied from the external power source 300 into a first level of DC power (e.g., 20 kW DC) and supply the converted DC power to the first charging module#1 100₁, thereby charging the battery 11 of the electric vehicle 10 at low speed using 20 kW DC power.

In various embodiments, when it is determined that the first charging module#1 100₁ and the electric vehicle 10 are connected through step S210 and a high-speed charging request is obtained from the user, the computing device 400 may call the second charging module 200.

In various embodiments, when it is determined that the first charging module#1 100₁ and the electric vehicle 10 are connected, the computing device 400 may call a second charging module 200 located at the most adjacent location among the plurality of second charging modules 200 with top priority. In this case, the computing device 400 may filter the second charging module 200 to be called in consideration of a charge amount of a battery of the electric vehicle 10 (e.g., may filter a second charging module 200 that is difficult to supply enough electric power to charge the battery of the electric vehicle 10).

In various embodiments, when it is determined that the first charging module#1 100₁ and the electric vehicle 10 are connected, the computing device 400 may call a second charging module 200 with a battery having the largest charge amount among the plurality of second charging modules 200 with priority. However, the present invention is not limited thereto.

In various embodiments, when a display is provided in at least a portion of the first charging module#1 100₁, the computing device 400 may provide a user interface (UI) for user authentication through the display as it is determined that the first charging module#1 100₁ and the electric vehicle 10 are connected, and may call the second charging module 200 in response to the user performing a user authentication procedure through the UI.

In various embodiments, when the display is not provided in at least a portion of the first charging module#1 100₁, the computing device 400 may be connected to the user terminal through a network, may provide the UI for user authentication to the user terminal, and may call the second charging module 200 in response to the user performing the user authentication procedure through the UI.

In various embodiments, the computing device 400 may supply the first level of electric power to the electric vehicle 10 through the first charging module#1 100₁ as the electric vehicle 10 and the first charging module#1 100₁ are connected, wherein the computing device may calculate an expected charging time of the electric vehicle 10 based on a charge amount of the battery of the electric vehicle 10 and determine whether to call the second charging module 200 depending on whether the calculated expected charging time is included within a preset time.

More specifically, when the preset time is one hour, the computing device 400 may determine the method of charging an electric vehicle 10 as a low-speed charging method when the expected charging time (the expected charging time until the battery of the electric vehicle 10 is fully charged as the first level of electric power is supplied to the electric vehicle 10) calculated based on the charge amount of the battery of the electric vehicle 10 is one hour or less, and accordingly, may supply electric power to the electric vehicle 10 using only the first charging module#1 100i without calling the second charging module 200.

More specifically, when the preset time is one hour, the computing device 400 may determine the method of charging an electric vehicle 10 as a high-speed charging method when the expected charging time (the expected charging time until the battery of the electric vehicle 10 is fully charged as the first level of electric power is supplied to the electric vehicle 10) calculated based on the charge amount of the battery of the electric vehicle 10 exceeds one hour, and accordingly, may supply the electric power of the first charging module#1 100₁ and the second charging module 200 to the electric vehicle 10 by calling the second charging module 200.

Here, the preset time may be a charging deadline or charging finish time of the electric vehicle 10 input by the user. For example, the preset time input by the user may be a value indicating a predetermined period of time, such as "N hours from the start of charging the electric vehicle 10," or a value indicating a specific point in time, such as "13:30."

In various embodiments, the first charging module#1 100₁ may include two first connectors 110, and when two different electric vehicles 10 are connected to the first charging module#1 100₁ through the two first connectors 110, respectively (for example, when two different electric vehicles 10 are parked on left and right sides of a pillar on which the first charging module 100 is installed and connected to the first charging module#1 100₁), the computing device 400 may supply electric power to each of two different electric vehicles 10 by calling the second charging module 200. In this case, since the electric power of the first charging module#1 100₁ and the electric power of the second charging module 200 are distributed and supplied to the two different electric vehicles 10, respectively, the electric power may be supplied only through the low-speed charging method.

In various embodiments, the computing device 400 may call the second charging modules 200 when the high-speed charging request is received from the user, wherein the number of the second charging modules to be called may be determined based on the number of electric vehicles 10 to be charged at high speed within one first charging module group 1000.

In step S230, the computing device 400 may supply the first level of electric power to the electric vehicle 10 by operating a high-speed charging mode as the second charging module 200 called through step S220 and the first charging module#1 100₁ are electrically connected to the electric vehicle 10. For example, the computing device 400 may add electric power (e.g., 20 kW DC) of the second charging module transferred through a representative first charging module 100₀ of the first charging module group 1000 to which first charging module#1 100₁ belongs and a first level of DC power (e.g., 20 kW DC) generated by converting AC power supplied from the external power source 300 into DC power when the second charging module moves along a preset line and is connected to the representative first charging module 100₀, thereby generating a second level of electric power (e.g., 40 kW DC), and may supply the generated second level of electric power to the electric vehicle 10, thereby charging the battery 11 of the electric vehicle 10 using 40 kW DC power at high speed.

In various embodiments, when the battery 11 of the electric vehicle 10 connected to the first charging module#1 100₁ is fully charged, the computing device 400 may control the operation of the representative first charging module 100₀ and the second charging module 200 so that the first charging module 100 is disconnected from the second charging module 200, thereby allowing the second charging module 200 to be connected to another representative first charging module 100₀ for charging another electric vehicle 10.

In addition, when it is determined that the battery of the electric vehicle 10 is fully chargeable within the preset time using only the first level of electric power supplied by the first charging module 100 based on the charge amount of the battery of the electric vehicle 10, the computing device 400 may control the operation of the representative first charging module 100₀ and the second charging module 200 to be disconnected from the second charging module 200.

In various embodiments, when the battery 11 of the electric vehicle 10 connected to the first charging module#1 100₁ is fully charged, the computing device 400 may control the operation of the representative first charging module 100₀ to supply the first level of electric power to the second charging module 200, thereby charging the battery provided in the second charging module 200 using the electric power of the external power source 300 supplied through the representative first charging module 100₀.

In various embodiments, when the expected charging time of the electric vehicle 10 calculated based on the charge amount of the battery of the electric vehicle 10 is included within the preset time, the computing device 400 may control the representative first charging module 100₀ to supply the first level of electric power to the second charging module 200 for a time equal to a difference between the preset time and the calculated expected charging time of the electric vehicle 10, thereby charging the battery provided in the second charging module 200 using the electric power of the external power source 300 supplied through the representative first charging module 100₀. For example, when the preset time is one hour and the expected charging time of the electric vehicle 10 is 40 minutes, the computing device 400 may control the representative first charging module 100₀ to supply the first level of electric power to the second charging module 200 for 20 minutes, which is the difference between the preset time and the expected charging time.

In various embodiments, the computing device 400 may designate the representative first charging module 100₀ of the first charging module group 1000 to which the first charging module#1 100_{N} belongs connected to the electric vehicle 10 as a charging base when a difference between a time preset by the user and the expected charging time of the electric vehicle 10 calculated based on the charge amount of the battery of the electric vehicle 10 exceeds a reference time (e.g., five hours), and when the charge amount of the battery of each of a plurality of second charging modules 200 located within a predetermined area falls below the reference value, may control the second charging module 200 to move to and connect to the representative first charging module 100₀ designated as the charging base so that the battery of the second charging module 200 is charged by receiving electric power from the external power source 300 through the representative first charging module 100₀ designated as the charging base.

In various embodiments, when it is determined that a specific one of first charging modules 100₀ to 100_{N} is not connected to the electric vehicle 10 or the battery of the electric vehicle 10 already connected to the specific one of first charging modules 100₀ to 100_{N} is fully charged, the computing device 400 may monitor a charge amount of a battery provided in each of the plurality of second charging modules 200, may select any one of the plurality of second charging modules 200 with a battery of which a charge amount is less than a preset reference value, and may control the operation of the specific one of first charging modules 100₀ to 100_{N} to call the selected any one second charging module 200. Then, the computing device 400 may control the operation of the representative first charging module 100₀ so that the first level of electric power is supplied to any one of the second charging modules 200 when a representative first charging module 100₀ of a group to which the specific one of first charging modules 100₀ to 100_{N} belongs and any one second charging module 200 are connected according to an calling operation of the specific one of first charging modules 100₀ to 100_{N}, thereby charging the second charging module 200 with a battery of a low charge amount using electric power from the external power source 300 supplied through the representative first charging module 100₀ when there is no connection to the electric vehicle 10 or the already connected electric vehicle 10 is fully charged.

In various embodiments, when the charge amount of a battery provided in the specific second charging module 200 is less than the preset reference value, the computing device 400 may control the operation of the specific second charging module 200 to select a first charging module group 1000 that is not connected to the electric vehicle 10 or a first charging module group 1000 with the smallest number of previously connected electric vehicles 10 among a plurality of first charging module groups 1000 through short-range wireless communication with the plurality of first charging module groups 1000, and may cause the specific second charging module 200 to move to and electrically connect to a representative first charging module 100₀ of the selected first charging module group 1000, thereby charging the battery of the specific second charging module 200 using the electric power of the external power source 300 supplied through the representative first charging module 100₀.

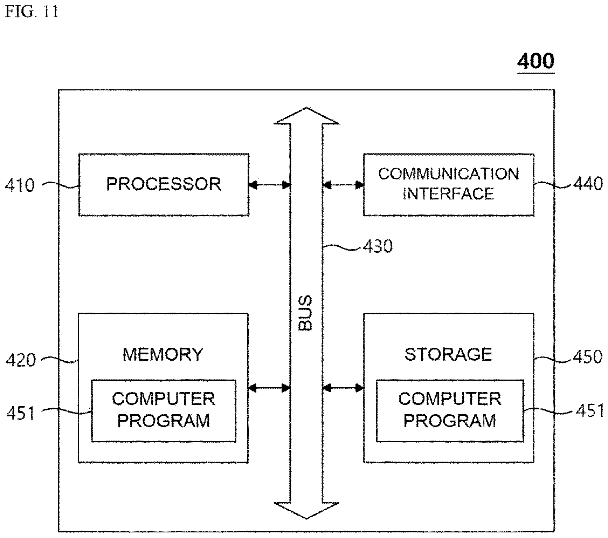

The method of charging an electric vehicle using a charging module described above has been described with reference to the flowcharts shown in the drawings. For simple description, the method of charging an electric vehicle using a charging module has been illustrated and described as a series of blocks, but the present invention is not limited to the order of the blocks, and some blocks may be performed simultaneously or in a different order than illustrated and described herein. In addition, new blocks not described in the specification and drawings may be added, or some blocks may be deleted or changed. Hereinafter, with reference to FIG. 11, a hardware configuration of a computing device 400 provided outside a first charging module 100 and a second charging module 200 and performing a method of charging an electric vehicle using a charging module and a method of charging an electric vehicle at low and high speeds using a charging module will be described.

FIG. 11 is a hardware configuration diagram of a server for performing a method of charging an electric vehicle using a charging module according to yet another embodiment of the present invention.

Referring to FIG. 11, in various embodiments, a computing device 400 may include one or more processors 410, a memory 420 for loading a computer program 451 performed by the processor 410, a bus 430, a communication interface 440, and a storage 450 for storing the computer program 451. Here, only components related to embodiments of the present invention are illustrated in FIG. 11. Accordingly, those of ordinary skill in the art to which the present invention pertains may see that other general-purpose components other than those illustrated in FIG. 11 may be further included.

The processor 410 controls the overall operation of each component of the computing device 400. The processor 410 may include a central processing unit (CPU), a micro processor unit (MPU), a micro controller unit (MCU), a graphic processing unit (GPU), or any type of processor well known in the art of the present invention.

In addition, the processor 410 may perform operations on at least one application or program for executing the method according to embodiments of the present invention, and the computing device 400 may include one or more processors

In various embodiments, the processor 410 may further include a random access memory (RAM) (not illustrated) and a read only memory (ROM) (not illustrated) that temporarily and/or permanently store signals (or data) processed within the processor 410. In addition, the processor 410 may be implemented in the form of a system on chip (SoC) including at least one of the graphics processing unit, the RAM, and the ROM.

The memory 420 stores various data, commands and/or information. The memory 420 may be loaded with the computer program 451 from the storage 450 to execute the methods/operations according to various embodiments of the present invention. When the computer program 451 is loaded into the memory 420, the processor 410 may perform the methods/operations by executing one or more instructions constituting the computer program 451. The memory 420 may be implemented as a volatile memory such as a RAM, but the technical scope of the present disclosure is not limited thereto.

The bus 430 provides communication functions between components of the computing device 400. The bus 430 may be implemented as various types of buses, such as an address bus, a data bus, a control bus, and the like.

The communication interface 440 supports wired and wireless Internet communication of the computing device 400. In addition, the communication interface 440 may support various communication methods other than Internet communication. To this end, the communication interface 440 may include a communication module well known in the technical field of the present invention. In some embodiments, the communication interface 440 may be omitted.

The storage 450 may non-temporarily store the computer program 451. When a process of charging an electric vehicle using a charging module is performed through the computing device 400, the storage 450 may store various information necessary to provide the process of charging an electric vehicle using a charging module.

The storage 450 may include a non-volatile memory such as a read only memory (ROM), an erasable programmable ROM (EPROM), an electrically erasable programmable ROM (EEPROM) a flash memory, or the like, a hard disk, a removable disk, or any form of computer-readable recording medium well known in the art to which the present invention pertains.

The computer program 451, when loaded into the memory 420, may include one or more instructions that cause the processor 410 to perform the methods/operations according to various embodiments of the present invention. That is, the processor 410 may perform the methods/operations according to various embodiments of the present invention by executing the one or more instructions.

In one embodiment, the computer program 451 may include one or more instructions for performing the method of charging an electric vehicle using a charging module, including electrically connecting one or more of a plurality of first charging modules and an electric vehicle, calling a second charging module, and charging a battery of the electric vehicle using electric power of the second charging module as the second charging module moves along a preset line in a second direction and is electrically connected to one or more first charging modules.

Steps of the method or algorithm described in relation to embodiments of the present invention may be implemented directly in hardware, implemented as a software module executed by hardware, or a combination thereof. The software module may reside on a random access memory (RAM), a read only memory (ROM), an erasable programmable ROM (EPROM), an electrically erasable programmable ROM (EEPROM), a flash memory, a hard disk, a removable disk, a CD-ROM, or any form of computer-readable recording medium well known in the art to which the present invention pertains.

Components of the present invention may be implemented as a program (or application) and stored in a medium to be executed in conjunction with a computer, which is hardware. Components of the present invention may be executed by software programming or software elements, and similarly, embodiments may be implemented in a programming or scripting language such as C, C++, Java, assembler, or the like, including various algorithms implemented as combinations of data structures, processes, routines or other programming constructs. Functional aspects may be implemented as algorithms executed on one or more processors.

In the above, the embodiments of the present invention have been described with reference to the accompanying drawings, and those of ordinary skill in the art to which the present invention pertains could understand that the additional or alternative embodiments may be embodied in other specific forms without departing from the technical spirit or essential features of the present invention. Therefore, it should be appreciated that the embodiments described above are intended to be illustrative in all respects and not restrictive.

## Claims

1. An electric vehicle charging system using a charging module, comprising:
a first charging module group including a plurality of first charging modules fixedly disposed on the same line within a predetermined area; and
a second charging module disposed within the predetermined area and configured to perform a movement operation according to a control command,
wherein the first charging module group calls the second charging module as one or more of the plurality of first charging modules and an electric vehicle are electrically connected, and charges a battery of the electric vehicle using electric power of the second charging module as the second charging module moves and is electrically connected to the one or more first charging modules.

2. The electric vehicle charging system of claim 1, wherein in the first charging module group, the plurality of first charging modules are connected to one power line in a first direction, wherein each of the plurality of first charging modules is electrically disconnectable from the others according to a charging method of the electric vehicle, and
electric power of the second charging module is supplied to the one or more first charging modules through a power line connecting a representative first charging module of the first charging module group and the one or more first charging modules when the second charging module moves along a preset line in a second direction and is connected to the representative first charging module.

3. The electric vehicle charging system of claim 2, wherein the representative first charging module is a first charging module fixedly disposed at a location closest to the preset line among the plurality of first charging modules.

4. The electric vehicle charging system of claim 2, wherein the representative first charging module includes a connector connected to the second charging module, and
the second charging module includes a camera sensor, and is connected to the connector by analyzing image data generated by photographing the connector through the camera sensor when a first marker attached to a location adjacent to the connector is identified using the camera sensor.

5. The electric vehicle charging system of claim 2, comprising a plurality of first charging module groups,
wherein the second charging module includes a camera sensor, and when a call is received from any one of the plurality of first charging module groups, determines a current location of the second charging module using the camera sensor to identify a second marker attached to a location adjacent to a representative first charging module of each of the plurality of first charging module groups and generates a movement path of the second charging module based on the determined current location of the second charging module.

6. The electric vehicle charging system of claim 2, comprising a plurality of first charging module groups,
wherein a laser line in the second direction is generated as the preset line by emitting a laser into a predetermined area through a laser output module provided in a representative first charging module of each of the plurality of first charging module groups, and
the second charging module moves along the generated laser line according to a control command.

7. The electric vehicle charging system of claim 1, comprising a plurality of second charging modules,
wherein the first charging module group calls the second charging modules as the plurality of first charging modules and the electric vehicle are connected, wherein the number of the second charging modules to be called is determined based on the number of the first charging modules connected to the electric vehicle among the plurality of first charging modules.

8. The electric vehicle charging system of claim 1, wherein the first charging module group charges the battery of the electric vehicle at low speed using electric power supplied from an external power source when the first charging module group is connected to the external power source and any one of the plurality of first charging modules is connected to the electric vehicle, and calls the second charging module when a high-speed charging request is received from a user and charges the battery of the electric vehicle at high speed using the electric power of the second charging module and the electric power of the external power source as the second charging module and the any one first charging module are electrically connected.

9. The electric vehicle charging system of claim 8, comprising a plurality of second charging modules,
wherein the second charging modules are called when the high-speed charging request is received from the user, wherein the number of the second charging modules to be called is determined based on the number of electric vehicles to be charged at high speed within one first charging module group.

10. The electric vehicle charging system of claim 8, comprising a plurality of first charging module groups,
wherein the second charging module includes a battery, selects any one of the plurality of first charging module groups when a charge amount of the battery is less than a reference value, and charges the battery by being connected to a representative first charging module of the selected any one first charging module group to receive electric power supplied from an external power source connected to the any one first charging module group through the representative first charging module of the selected any one first charging module group.

11. A method of charging an electric vehicle using a charging module that is performed using an electric vehicle charging system using a charging module including a first charging module group including a plurality of first charging modules fixedly disposed on the same line within a predetermined area and a second charging module disposed within the predetermined area and configured to perform a movement operation according to a control command, the method comprising:
electrically connecting one or more of the plurality of first charging modules and the electric vehicle;
calling the second charging module; and
charging a battery of the electric vehicle using electric power of the second charging module as the second charging module moves and is electrically connected to the one or more first charging modules.
